# EUROPÄISCHE PATENTSCHRIFT

(11) **EP 2 303 788 B1**
(45) Veröffentlichungstag und Bekanntmachung des Hinweises auf die Patenterteilung: **31.10.2012**
(21) Anmeldenummer: 10720759.9
(22) Anmeldetag: 17.05.2010
(51) Int. Cl.: C03B 37/027, C03B 37/029, C03C 25/00, C03C 25/12, G02B 6/00, H01S 3/067

(54) **VERFAHREN ZUR HERSTELLUNG EINER GLASFASER**
METHOD FOR PRODUCING A GLASS FIBER
PROCÉDÉ POUR FABRIQUER UNE FIBRE DE VERRE

(30) Priorität: 20.05.2009 DE 102009022039
(43) Veröffentlichungstag der Anmeldung: 06.04.2011
(73) Patentinhaber: J-Fiber GmbH, 07751 Jena (DE)
(72) Erfinder: HÄMMERLE, Wolfgang, 07745 Jena (DE); BREHM, Lothar, 07743 Jena (DE); AUTH, Matthias, 45289 Essen (DE)
(74) Vertreter: Meissner, Bolte & Partner
(86) Internationale Anmeldenummer: PCT/EP2010/056711
(87) Internationale Veröffentlichungsnummer: WO 2010/133537

(56) Entgegenhaltungen:
- DE-A1-102006 012 869
- JP-A- 3 050 134
- JP-A- 8 217 482
- JP-A- 59 227 738
- JP-A- 2004 043 231
- JP-A- 2004 338 972
- JP-A- 2005 187 285
- JP-A- 2005 281 090
- JP-A- 2005 343 703
- US-A1- 2004 033 043
- US-A1- 2005 259 932
- US-A1- 2005 281 521

## Beschreibung

Die Erfindung betrifft ein Verfahren zur Herstellung einer Glasfaser nach Anspruch 1

Glasfasern finden als Lichtleitfasern, aber auch als Resonatoren bei der Erzeugung von Laserlicht eine breite Anwendung. Zur Fertigung derartiger Fasern wird ein Glasfaserrohling, die so genannte Preform, in einem Ziehofen erwärmt und mittels einer Ziehvorrichtung in die Form der Glasfaser gestreckt. Diese wird nachfolgend abgekühlt, im allgemeinen mit einer vorzugsweise aus einem Polymer bestehenden Schutzschicht versehen und mit Hilfe einer Aufwickelvorrichtung gesammelt.

Mit zunehmendem Gebrauch derartiger Fasern tritt jedoch der Effekt eines so genannten Photodarkenings auf. Darunter versteht man eine nachteilige Wechselwirkung des innerhalb der Faser geleiteten Lichtes mit Strukturen innerhalb des Gefüges der Faser. Dieser Effekt ist teilweise abhängig von der Wellenlänge des in die Faser eingekoppelten Lichtes. Er führt zu einem mit der Zeit zunehmenden optischen Verlust bei der Lichtleitung in der Glasfaser sowie zu einer abnehmenden Leistungsdichte des erzeugten Laserlichtes innerhalb einer als Resonator verwendeten aktiven Laserfaser. Das Photodarkening ist insbesondere bei Yb-dotierten Glas- bzw. Laserfasern zu beobachten. Dabei nimmt die Absorption innerhalb des Glasmaterials bei hohen Besetungsinversionen sprungartig zu, wobei es zu einer lawinenartig anwachsenden breitbandigen Absorption im Material kommt. Das erzeugte Laserlicht wird deshalb zunehmend gedämpft und die Güte des Resonators und damit die Laserausgangsleistung lässt somit spürbar nach.

Zur Eindämmung dieses optischen Effektes sind aus dem Stand der Technik einige Maßnahmen bekannt. Diese zielen darauf ab, die innere Struktur der gefertigten Glasfaser so zu beeinflussen, dass das Photodarkening möglichst langsam einsetzt und nur langsam fortschreitet oder zum Stillstand kommt.

So beschreiben beispielsweise die US-amerikanische Anmeldeschrift US 2006/0191293 A1 sowie die japanischen Druckschriften JP 2005187285 AA und JP 2005281090 AA jeweils Fertigungsverfahren für eine Glasfaser, bei dem der Ziehofenvorrichtung eine zusätzliche Temperzone nachgeschaltet ist. Dem dort offenbarten Verfahren liegt der Gedanke zugrunde, dass während des Ziehprozesses mechanische Spannungen und Inhomogenitäten in die Glasfaser eingetragen werden, deren Beseitigung und Heilung durch den Temperprozess bezweckt werden soll.

Die japanische Druckschrift JP 2004043231 AA beschreibt ein Herstellungsverfahren für eine optische Glasfaser, bei dem ein Tempern vor Beginn des Ziehverfahrens an der Preform ausgeführt wird, während die gezogene Glasfaser anschließend langsam während eines nachgeschalteten zweiten Temperprozesses abgekühlt wird. Dem dort offenbarten Verfahren liegt die Vorstellung zugrunde, dass die Prozesse des Photodarkenings sowohl durch Inhomogenitäten und Spannungen innerhalb der Preform als auch in der gezogenen Faser zustande kommen, sodass diese in einem doppelt ausgeführten Temperprozess zu beseitigen sind.

Genauere Untersuchungen des Photodarkenings haben allerdings gezeigt, dass die beschriebenen optischen Effekte sich aber nicht wirklich vollständig durch das beschriebene Tempern der Glasfaser oder der Preform beseitigen lassen, sodass die Qualität der gezogenen Faser oftmals den an sie gestellten Ansprüchen nicht gerecht wird.

Es besteht somit die Aufgabe, ein Verfahren zur Herstellung einer Glasfaser anzugeben, mit dem sich das Photodarkening in einer noch nachhaltigeren Weise vermindern lässt.

Die Lösung der Aufgabe erfolgt mit einem Verfahren mit den Merkmalen des Anspruchs 1

Erfindungsgemäß wird das Verfahren zur Herstellung einer Glasfaser durch ein an einer Preform ausgeführtes Langziehen in einem Ziehofen ausgeführt, wobei eine Abkühlung der Glasfaser in mindestens drei zeitlichen Phasen erfolgt. Dabei wird die Glasfaser oberhalb eines Kristallisationstemperatur-Bereiches einer ersten zeitlichen Abkühlrate, innerhalb eines Kristallisationstemperatur-Bereiches einer im Vergleich zur ersten Abkühlrate größeren zweiten zeitlichen Abkühlrate und unterhalb des Kristallisationstemperatur-Bereiches einer im Vergleich zur zweiten Abkühlrate geringeren dritten Abkühlrate ausgesetzt.

Dem genannten Verfahrensablauf liegt die Erkenntnis zugrunde, dass das Photodarkening, insbesondere in Ytterbium-dotierten Laserfasern, zu einem nicht unerheblichen Teil auch durch Kristallisationsprozesse, also durch einen zumindest teilweisen Übergang der amorphen Glasstruktur in einen kristallinen Aufbau signifikant beeinflusst wird. Derartige Materialveränderungen lassen sich durch einen reinen Temperprozess aber praktisch nicht beeinflussen. Erfindungsgemäß wird daher darauf abgezielt, die Abkühlung der Glasfaser so zu gestalten, dass der Temperaturbereich, in welchem innerhalb der Faser Kristallisierungen mit einem Verlust der amorphen Glasstruktur erfolgen, möglichst schnell durchlaufen wird, sodass für den Kristallisationsprozess möglichst wenig Zeit bleibt. Das Verfahren geht weiterhin von der Erkenntnis aus, dass oberhalb und unterhalb des Kristallisationstemperatur-Bereiches, also bei Vorliegen einer reinen Glasphase durch eine möglichst langsame Abkühlung eine Ausheilung der bei der Preformherstellung bzw. bei der Ausbildung der Ziehzwiebel entstandenden Glasdefekte erreicht wird, indem eine niedrige Abkühlrate gefahren wird. Dadurch wird zum einen ein Eintragen von Spannungen beim Ziehen der Glasfaser minimiert, während unterhalb des Kristallisationstemperatur-Bereiches ein Ausheilen von möglicherweise verbliebenen Defekten in der Faser erfolgen kann.

Bei einer zweckmäßigen Ausführungsform wird die erste zeitliche Abkühlrate dadurch erreicht, indem das Ziehen der Glasfaser mit einer Ziehgeschwindigkeit von weniger als 10 m/min, bevorzugt weniger als 5 m/min und noch mehr bevorzugt weniger als 2 m/min bewirkt wird. Die Faser bleibt somit länger in einem heißen Anfangszustand, wobei gleichzeitig vorhandene Spannungen und thermisch ausheilbare Defekte in der Faser abgebaut und die Ausbildung neuer Spannungen und unerwünschter Defekte möglichst vermieden werden.

Weiterhin kann bei einer weiteren Ausführungsform die erste zeitliche Abkühlrate durch eine in dem Ziehofen angeordnete verlängerte heiße Kernzone bewirkt werden. Es wird somit verhindert, dass die gezogene Faser schnell in den Temperaturbereich der Kristallisation hinein abkühlt. Vielmehr wird diese Abkühlung auf eine geeignete Weise verzögert.

Die innerhalb des Kristallisationstemperatur-Bereiches zu durchlaufende zweite zeitliche Abkühlrate wird bei einer Ausführungsform durch eine dem Ziehofen nachgeschaltete Kühlstrecke bewirkt. Die Kühlstrecke bewirkt ein schnelles Abkühlen und damit ein schnelles Durchlaufen des Kristallisationstemperatur-Bereiches. Dadurch ist mit anderen Worten die Abkühlrate der Faser in diesem Temperaturbereich sehr viel höher als deren Kristallisationsrate, sodass die Kristallisation in der Faser wirksam gehindert wird.

Bei einer Ausführungsform wird die dritte zeitliche Abkühlrate durch eine dem Ziehofen und/oder der Kühlstrecke nachgeschaltete zweite Ofenvorrichtung bewirkt, wobei die Ofenvorrichtung innerhalb einer Kernzone die Glasfaser bei einer an der zweiten Ofenvorrichtung vorliegenden Eintrittstemperatur hält. Die nachgeschaltete Ofenvorrichtung bezweckt daher kein Aufheizen der Glasfaser. Sie dient lediglich dazu, den Temperaturabfall nach dem Durchlaufen der zweiten Abkühlrate aufzuhalten und die Glasfaser bei der dabei erreichten Zwischentemperatur abzufangen, während bei dem letzten Abkühlprozess vorzugsweise Defekte innerhalb der Glasfaser ausheilen, aber auch noch Restspannungen in der Glasfaser abgebaut werden können.

Ergänzend dazu kann zur Herstellung der Preform ein Beschichtungsprozess in einer Atmosphäre mit einem reduzierten Sauerstoffanteil ausgeführt und/oder an der Preform und/oder der Glasfaser eine Bestrahlung im Spektralbereich zwischen 170 nm und 12 µm ausgeführt werden.

Bei einer zweckmäßigen Ausführungsform erfolgt die Bestrahlung der Preform und/oder der Glasfaser durch ein Einkoppeln der Strahlung in den Lichtleitweg der Preform und/oder der Glasfaser.

Vorrichtungsseitig ist ein Ziehofen mit einer oberhalb eines Kristallisationsbereiches eines Glases gelegenen Kerntemperatur, eine dem Ziehofen nachgeschaltete Kühlstrecke mit einem innerhalb des Kristallisationsbereiches des Glases gelegenen Zwischentemperaturverlauf und einen der Kühlstrecke nachgeschalteten Temperofen mit einer unterhalb des Kristallisationsbereiches gelegenen Kerntemperatur vorgesehen.

Der Ziehofen enthält eine Ziehvorrichtung zum Erzeugen einer Ziehgeschwindigkeit mit weniger als 5 m/min. Weiterhin ist eine Vorrichtung zum Einkoppeln ultravioletter und/oder infraroter Strahlung in den Lichtleitweg der Preform und/oder der Glasfaser vorgesehen.

Das erfindungsgemäße Verfahren soll nachfolgend anhand von Ausführungsbeispielen näher erläutert werden. Zur Verdeutlichung dienen die beigefügten Figuren 1 bis 5. Es werden für gleiche oder gleichwirkende Teile und Verfahrensschritte die selben Bezugszeichen verwendet.

Es zeigt:
Fig. 1 eine beispielhafte Darstellung des Temperaturregimes während der Abkühlung der Glasfaser,
Fig. 2 eine beispielhafte Darstellung einer Vorrichtung zur Ausführung des Verfahrens und zur Realisierung des in Fig. 1 gezeigten Temperaturregimes,
Fig. 3 eine Darstellung eines zeitlichen Verlaufs des Photodarkenings in Abhängigkeit von unterschiedlichen Ziehgeschwindigkeiten der Glasfaser,
Fig. 4 eine Darstellung eines zeitlichen Verlaufs des Photodarkenings bei einer Wellenlänge von 633 nm,
Fig. 5 eine weitere Darstellung eines zeitlichen Verlaufs eines drastisch verringerten Photodarkenings.

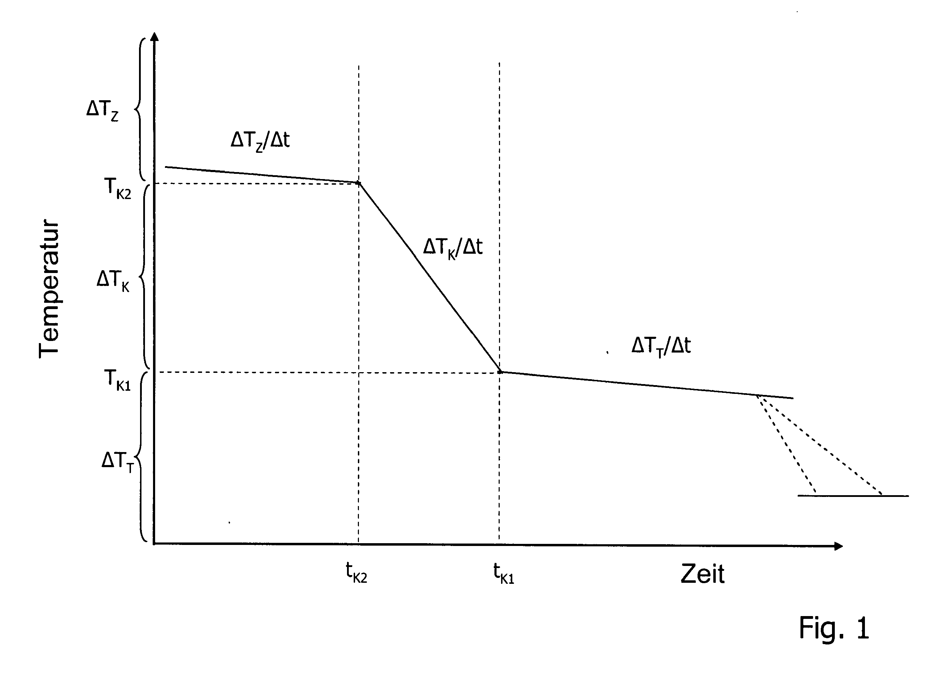

Fig. 1 zeigt ein beispielhaftes Temperaturregime zur Ausführung des Verfahrens. Das Verfahren wird innerhalb von drei Temperaturbereichen ausgeführt. Ein erster Temperaturbereich T_{Z} umfasst den Temperaturbereich, in welchem die Glasfaser gezogen wird. Dieser wird innerhalb einer Ziehofenanordnung realisiert.

Die Glasfaser durchläuft bei ihrer weiteren Abkühlung einen Kristallisationsbereich T_{K}. Dieser zeichnet sich dadurch aus, dass es innerhalb dieses Temperaturabschnittes zur Bildung von Kristallisationskeimen und abhängig von der Aufenthaltsdauer in diesem Temperaturbereich zu einer Kristallisation innerhalb des Faserkerns kommt. Der Kristallisationsbereich ist durch eine untere Kristallisationstemperatur T_{K1} und eine obere Kristallisationstemperatur T_{K2} begrenzt.

Unterhalb des Kristallisationsbereiches T_{K} schließt sich ein Temperbereich T_{T} an. Innerhalb dieses Bereiches treten keine weiteren Kristallisationseffekte mehr auf, während sich Inhomogenitäten in Form von Glasdefekten und unter Umständen auch prozessbedingte Spannungen im Glaskern allerdings ausheilen bzw. abbauen lassen. Typische Werte für T_{K2} liegen bei etwa 1500 °C und darüber, während die untere Kristallisationstemperatur T_{K1} etwa 1150 °C und weniger beträgt. Diese Parameter sind in hohem Maße von der verwendeten Glasmatrix abhängig und müssen daher vom Fachmann an das jeweilige Glas entsprechend angepasst werden.

Innerhalb der erwähnten Temperaturphasen wird die Glasfaser drei verschiedenen Abkühlraten unterworfen. Eine erste Abkühlung erfolgt innerhalb des Temperaturbereiches ΔT_{Z} bei einer verhältnismäßig niedrigen Abkühlrate ΔT_{Z}/Δt. Weil das Ziehen der Glasfaser innerhalb einer Kernzone des Ziehofens ausgeführt wird, in welchem eine nahezu konstante Temperatur herrscht, ist in diesem Fall die Abkühlrate ΔT_{Z}/Δt sehr gering. Sie nimmt nur dann einen höheren Wert an, wenn die gezogene Glasfaser die Kernzone der Ziehofenvorrichtung verlässt. Jedoch kann auch außerhalb der Kernzone des Ziehofens eine niedrige Abkühlrate dadurch gesichert werden, indem die Aufenthaltsdauer der Glasfaser innerhalb der Ziehofenanordnung stark verlängert wird.

Eine niedrige Abkühlrate ΔT_{Z}/Δt wird daher im Wesentlichen auf zwei Arten erreicht. Zum einen wird eine Ziehgeschwindigkeit der Glasfaser drastisch reduziert. Während bei den aus dem Stand der Technik bekannten Ziehverfahren für die Fertigung von Sonderfasern Ziehgeschwindigkeiten ≥ 10 m/min bevorzugt werden, erfolgt im hier beschriebenen Verfahren das Ziehen bei einer Ziehgeschwindigkeit von beispielsweise 0,5 bis 1 m/min und ist damit auf weniger als ein Zehntel des sonst üblichen Wertes verlangsamt. Entsprechend niedrig ist damit die Abkühlrate innerhalb der Ziehofenvorrichtung.

Zum anderen ist die in der Ziehofenvorrichtung vorhandene heiße Kernzone so gestaltet, dass deren Ausdehnung im Vergleich zu den aus dem Stand der Technik bekannten Verfahren deutlich vergrößert ist. Dadurch nimmt die Verweildauer der gezogenen Glasfaser in der Ziehofenvorrichtung zu und die Abkühlrate der Glasfaser somit zusätzlich ab.

Durch diese niedrige Abkühlrate ΔT_{Z}/Δt, insbesondere die deutlich verringerte Ziehgeschwindigkeit und die lange heiße Zone in der Ziehofenvorrichtung, wird eine effiziente Ausheilung von bereits in der Preform vorliegenden Precursordefekten erreicht, die zum Teil für das Photodarkening ursächlich sind. Die beim Photodarkening temporär auftretenden ladungsgetrennten Zustände, wie sie von Arai et. al. in Fujikura Technical Review 2009 beschrieben werden, können durch diese fehlerarme Raumnetzstruktur in der Glasmatrix besonders gut ohne permanente Strukturänderung in der Matrix rekombinieren. Dadurch wird das Photodarkening minimiert.

Im Gegensatz zu der sehr niedrigen Abkühlrate ΔT_{Z}/Δt in der Ziehofenvorrichtung durchläuft die Glasfader den Kristallisationsbereich ΔT_{K} mit einer sehr viel höheren Abkühlrate ΔT_{K}/Δt. Das schnelle Abkühlen der Glasfaser verhindert, dass die Kristallisation möglichst begrenzt und auf wenige Kristallisationskeime beschränkt bleibt. Die Glasfaser wird gleichsam so schnell abgekühlt, dass der Kristallisationsbereich bereits durchlaufen worden ist, bevor sich die Kristallisation in der Faser ausgebreitet hat bzw. eingesetzt hat. Dies wird dadurch erreicht, indem der Kristallisationsbereich der Glasfaser zwischen einer oberen Kristallisationstemperatur T_{K2} und einer unteren Kristallisationstemperatur T_{K1} schnell durchlaufen wird. Dabei wird ein Zeitabschnitt zwischen einem Zeitpunkt t_{K2}, an welchem die Faser die Temperatur T_{K2} aufweist und einem Zeitpunkt t_{K1}, an welchem die Faser die Temperatur T_{K1} erreicht hat, möglichst kurz gehalten.

Unterhalb der unteren Kristallisationstemperatur T_{K1} im Temperbereich T_{T} wird die Abkühlung der Glasfaser mit einer niedrigen Abkühlrate ΔT_{T}/Δt fortgesetzt. Hierzu ist eine weitere Heizstrecke, insbesondere ein Temperofen, vorgesehen. Dessen heiße Zone erreicht die Glasfaser dann, wenn deren Temperatur unter die untere Kristallisationstemperatur T_{K1} abgesunken ist. Die Faser wird in dem Temperofen nicht mehr erwärmt, sondern nur möglichst lange auf ihrer Eintrittstemperatur gehalten. Während des Temperabschnitts werden noch vorhandene Glasdefekte, die für das Photodarkeningverhalten mitbestimmend sind, weiter ausgeheilt.

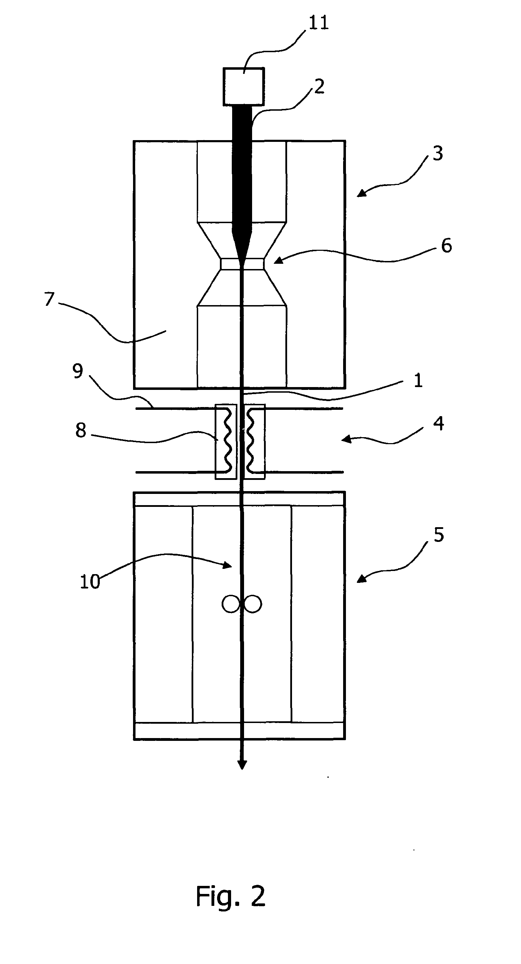

Fig. 2 zeigt eine beispielhafte Vorrichtung zum Ausführen des genannten Verfahrens. Die Vorrichtung dient zur Fertigung einer Glasfaser 1, wobei eine Preform 2 als Ausgangsmaterial verwendet wird. Diese wird in einem Ziehofen 3 zu der Glasfaser gestreckt. Dem Ziehofen ist eine Kühlstrecke 4 nachgeschaltet. Der Kühlstrecke schließt sich ein Temperofen 5 an. Gemäß den vorhergehenden Ausführungen liegt in dem Ziehofen eine Temperatur oberhalb des Kristallisationsbereiches der Glasfaser vor. Die Kühlstrecke kühlt die Glasfaser mit einer hohen Abkühlrate von der oberen Kristallisationstemperatur auf die untere Kristallisationstemperatur ab. Der Temperofen übernimmt die so abgekühlte Glasfaser und hält diese auf einem knapp unterhalb der unteren Kristallisationstemperatur liegenden Temperaturwert.

Zum Realisieren einer möglichst niedrigen Abkühlrate umfasst die Ziahanlage eine Ziehvorrichtung, die für eine niedrige Ziehgeschwindigkeit ausgelegt ist. Die Ziehgeschwindigkeit ist dabei auf einen Wert eingestellt, der höchstens ein Zehntel des für einen derartigen Ziehvorgang üblichen Wertes eingestellt ist. Dadurch wird die Verweildauer der gezogenen Glasfaser im Ziehofen maximiert. Weiterhin enthält der Ziehofen eine Anordnung geeignet geformter und positionierter Graphitelemente 7, die die heiße Kernzone des Ziehofens ausdehnen und diese auch über den eigentlichen Ziehbereich im Ofen hinaus beibehalten.

Die Kühlstrecke 4 enthält eine Anordnung von Kühlelementen 8, die entweder mit einem Kühlmedium 9 beaufschlagt werden oder über eine Lamellenanordnung die von der Glasfaser abgegebene Wärme effektiv an die Umgebung abführen. Für eine möglichst hohe Abkühlrate der Glasfaser um ca. 200 K in einem Zeitraum von wenigen Sekunden muss die Differenz zwischen der Glasfasertemperatur und der Umgebungsatmosphäre möglichst groß sein. Die Umgebungsatmosphäre wird daher auf einen möglichst niedrigen Temperaturwert, beispielsweise auf eine Temperatur von 10 bis 0°C, abgekühlt. Die Kühlelemente sind daher beispielsweise als Verdampfer in einem Kühlkreislauf ausgelegt. Alternativ dazu können die Kühlelemente als ein Gebläse ausgelegt sein, bei dem ein adiabatisch entspanntes und entsprechend kaltes Gas, insbesondere Kohlendioxid, auf die Glasfaser geleitet wird. Ebenso sind Kühlelemente möglich, bei denen die Glasfaser mit einem flüssigen, auf der Glasfaseroberfläche rückstandslos verdampfenden Medium besprüht wird. Hierzu kommt kaltes, vorzugsweise fein vernebeltes Wasser oder fein vernebelter flüssiger Stickstoff oder ein anderes Kühlmedium in Betracht.

Der der Kühlstrecke 4 nachgeschaltete Temperofen 5 ist auf die Temperatur der Glasfaser eingestellt, die diese am Ende der Kühlstrecke angenommen hat.

Die Glasfaser tritt somit in den Kernbereich des Temperofens ein, ohne dass ein weiterer Abkühlvorgang oder ein Aufheizen erfolgt.

Weiterhin ist eine Einkoppelvorrichtung 11 vorgesehen, mit der elektromagnetische Strahlung im Spektralbereich zwischen 170 nm und 12 µm sowohl in die Preform 2 als auch damit in die Glasfaser 1 eingekoppelt werden kann.

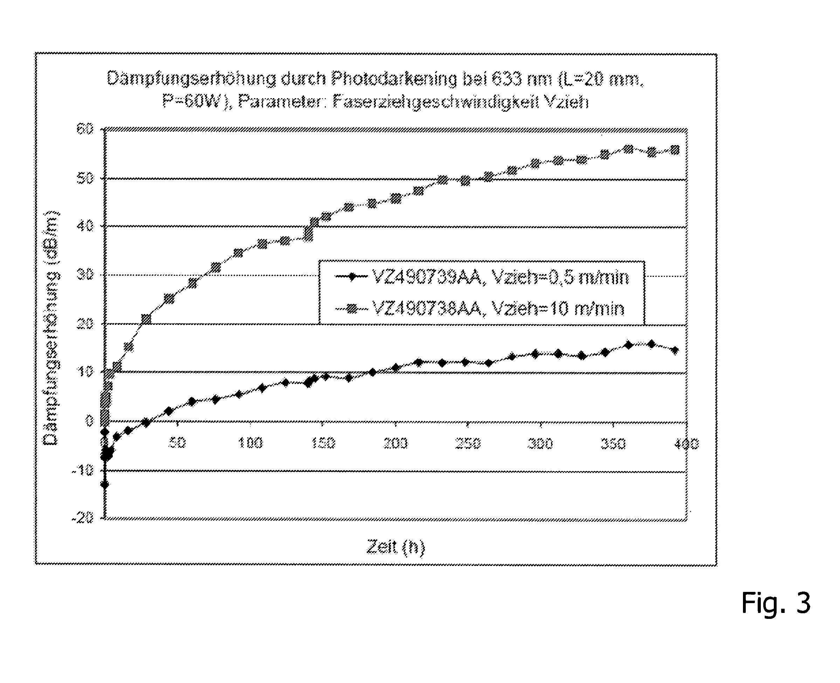

Fig. 3 zeigt anhand eines Beispiels den Einfluss verschiedener Faserziehgeschwindigkeiten auf das festgestellte Photodarkening. Das in der Figur dargestellte Diagramm zeigt die auf eine Längeneinheit der Faser bezogene Dämpfungserhöhung in dB/m in Abhängigkeit von der Zeit, d.h. von der Benutzungsdauer der Faser bei einer Wellenlänge des eingekoppelten Lichtes von 633 nm. Der durch eine Folge von Quadraten dargestellte Verlauf zeigt das Photodarkening einer Glasfaser, die mit einer Faserziehgeschwindigkeit von 10 m/min, also entsprechend schnell, gezogen worden ist. Das Diagramm zeigt eine sehr rasche Zunahme des Photodarkenings bei der schnell gezogenen Glasfaser. Die Dämpfungserhöhung beträgt bereits während der ersten zehn Betriebsstunden etwa 15 bis 20 dB/m und nähert sich bei ca. 400 Betriebsstunden einem Endwert von etwa 55 dB/m an.

Im Vergleich dazu zeigt das Diagramm den zeitlichen Verlauf des Photodarkenings bei einer Glasfaser, die mit einer Geschwindigkeit von 0,5 m/min gezogen worden ist. Die Dämpfung nimmt im Vergleich zur schnell gezogenen Glasfaser bedeutend langsamer zu, der bei ca. 400 Betriebsstunden erreichte Endwert beträgt nur ca. 15 dB/m und ist damit etwa 4 mal niedriger.

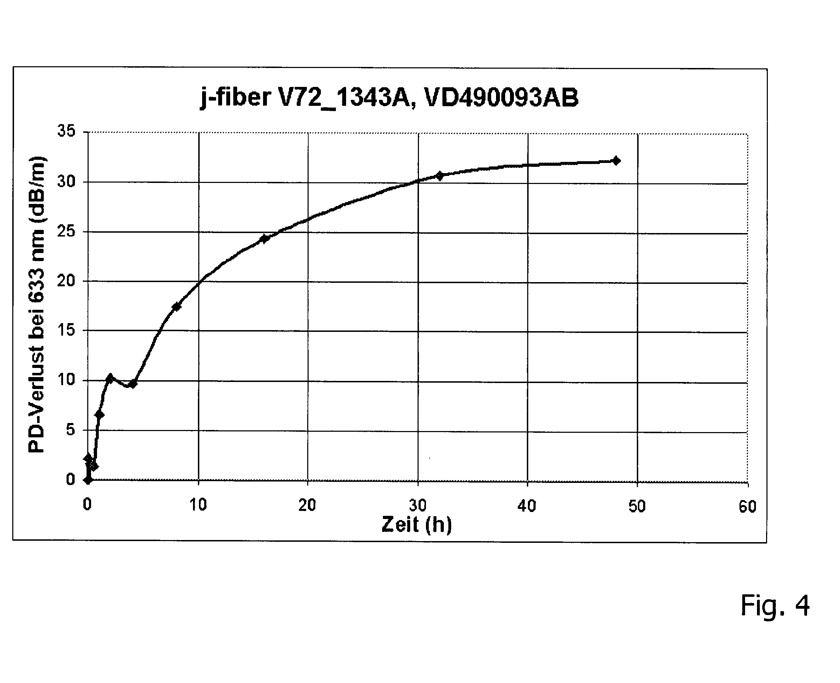

Fig. 4 zeigt das zeitabhängige Dämpfungsverhalten eines weiteren Ausführungsbeispiels bei einer ersten höheren Ziehgeschwindigkeit. Bei der Herstellung wurde von einer Preform ausgegangen, die eine P2O5-Al2O3-Yb2O3-Dotierung im Kernbereich aufweist. Die Preform wurde nach dem Ummanteln und Anschleifen eines Doppel-D verzogen. Die Ziehgeschwindigkeit betrug 10 m/min, die Abzugskraft etwa 180 cN. Es wurde ein Umkreisdurchmesser von ca. 450 µm und ein Innenkreisdurchmesser von ca. 400 µm Innenkreisdurchmesser erzeugt. Es wurde ein Kerndurchmesser von ca. 20 µm erreicht.

Die Photodarkening-Verluste bei 633 nm betrugen bei dieser Glasfaser nach ca. 48 h ca. 33 dB/m.

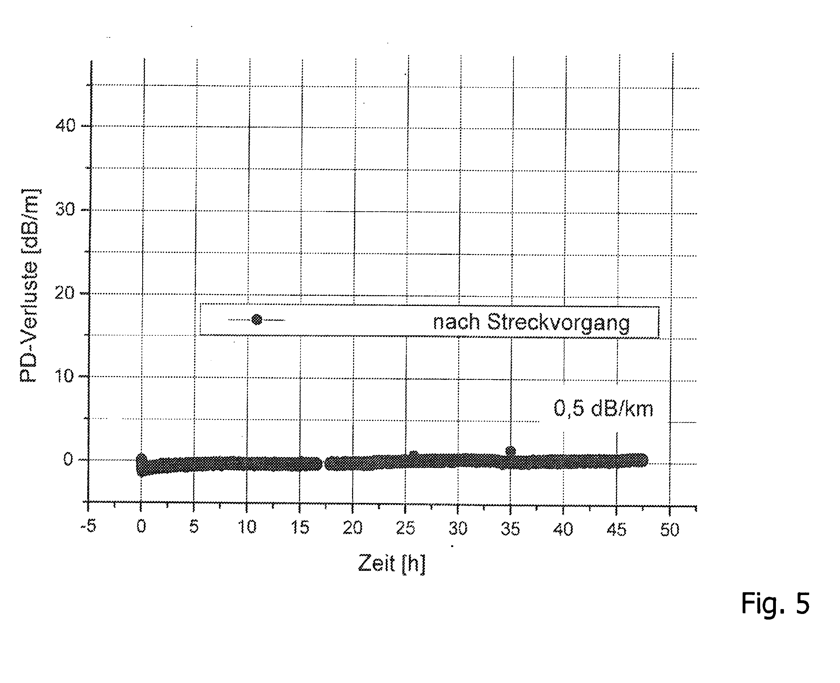

Fig. 5 zeigt ein Ausführungsbeispiel für eine weitere Faser des gleichen Faserzuges aus Fig. 4, die auf einem am Taperstreckplatz nun mit einer geringeren Geschwindigkeit gestreckt worden ist. Im Taperstreckplatz wurde die Ausgangsfaser eingespannt und durch Bestrahlung mit einem CO₂-Laser örtlich partiell bis an die Erweichungstemperatur von ca. 1400 °C-1600 °C erwärmt. Die örtlich erwärmte Faser wurde anschließend bei geringer Vorschub- und Abzugsgeschwindigkeit auf den vorgegeben Faserdurchmesser gestreckt: Die Abzugsgeschwindigkeit für die Faser lag im Bereich von ca. 10 cm/min. Dieser Wert ist um ca. 2 Größenordnungen geringer als die ursprüngliche Faserziehgeschwindigkeit von 10 m/min. Durch diese geringe Streckgeschwindigkeit wird die gestreckte Faser deutlich langsamer abgekühlt.

Die gemessenen Photodarkening-Verluste an der gestreckten Faser betragen ca. 0,5 dB/m bei 633 nm und einer Messzeit von ca. 48 h. Fig. 5 zeigt die dabei ermittelten Werte in einer graphischen Darstellung. Die ermittelten Werte der Photodarkeningverluste sind um einen Faktor von ca. 60 bis 70 im Vergleich zu den an der schnell gezogenen Faser ermittelten Werten erniedrigt. Die extrem unterschiedlichen Ziehbedingungen für das Faserziehen bei 10m/min und das Verziehen am bei 10 cm/min können als Ursache für die extreme Verbesserung des Photodarkening-Verhaltens der Fasern angesehen werden.

Die chemische Zusammensetzung des aktiven Kerns der Faser ist nicht auf die in den Beispielen genannten Komponenten beschränkt. So kann die Laserstrahlung ebenfalls durch andere Laserübergangänge als die von Ytterbium erzeugt werden. Besonders gut eignen sich so genannte f-Elemente der Gruppe der Lanthaniden oder Seltenen Erden, wie beispielsweise Neodym. Für andere Laserfasern muss die das Lasermedium stabilisierende Glas- bzw. Clustermatrix so geeignet angepasst werden, dass die durch eine einwirkende Pumpstrahlung induzierten temporär erzeugten ladungsgetrennten Zustände, die ursächlich für das Photodarkening sind, möglichst schnell rekombinieren bzw. relaxieren. Dies durch eine verschiedenartige Stöchiometrie der matrixbildenden Elemente oder durch den Einsatz anderer bzw. weiterer Elementverbindungen erfolgen, welche neben der Bildung einer stabilen Glasmatrix ebenfalls die Aufgabe eines Ladungsquenchers erfüllen. Für Ytterbium-dotierte Faserlaserhat sich eine Komponentenmatrix bestehend im Wesentlichen aus Aluminiumoxid, Siliziumoxid, Phosphoroxid und Wasserstoff in geeigneter Stöchiometrie als besonders günstig herausgestellt.

Das erfindungsgemäße Verfahren wurde anhand von Ausführungsbeispielen erläutert. Im Rahmen fachmännischen Handelns sind weitere Ausführungsformen möglich. Diese ergeben sich insbesondere aus den Unteransprüchen.

### Bezugszeichenliste

- ΔT_{K}: Kristallisationsbereich
- T_{K1}: untere Kristallisationstemperatur
- T_{K2}: obere Kristallisationstemperatur
- ΔT_{T}: Temperbereich
- ΔT_{Z}: Zugtemperaturbereich
- ΔT_{K}/Δt: Abkühlrate im Kristallisationsbereich
- ΔT_{T}/Δt: Abkühlrate im Temperbereich
- ΔT_{Z}/Δt: Abkühlrate im Zugtemperaturbereich

- 1: Glasfaser
- 2: Preform
- 3: Ziehofen
- 4: Kühlstrecke
- 5: Temperofen
- 6: Ziehvorrichtung
- 7: Graphitelemente
- 8: Kühlelement
- 9: Kühlmedium
- 10: Transporteinrichtung
- 11: Einkoppelvorrichtung

## Patentansprüche

1. Verfahren zur Herstellung einer Glasfaser (1) durch ein an einer Preform (2) ausgeführtes Langziehen in einem Ziehofen (3),
wobei
eine Abkühlung der Glasfaser in mindestens drei zeitlichen Phasen erfolgt, bei denen die Glasfaser oberhalb eines Kristallisationstemperatur-Bereiches (ΔT_{K}) einer ersten zeitlichen Abkühlrate (ΔT_{Z}/Δt), innerhalb des Kristallisationstemperatur-Bereiches einer im Vergleich zur ersten Abkühlrate größeren zweiten zeitlichen Abkühlrate (ΔT_{K}/Δt) und unterhalb des Kristallisationstemperatur-Bereiches einer im Vergleich zur zweiten Abkühlrate geringeren dritten Abkühlrate (ΔT_{T}/Δt) ausgesetzt ist.

2. Verfahren nach Anspruch 1,
**dadurch gekennzeichnet, dass**
die erste zeitliche Abkühlrate (ΔT_{Z}/Δt) durch eine Ziehgeschwindigkeit von weniger als 10 m/min, bevorzugt weniger als 5 m/min, noch mehr bevorzugt weniger als 2 m/min bewirkt wird.

3. Verfahren nach Anspruch 1 oder 2,
**dadurch gekennzeichnet, dass**
die erste zeitliche Abkühlrate (ΔT_{Z}/Δt) durch eine in dem Ziehofen angeordnete verlängerte heiße Kernzone bestimmt wird.

4. Verfahren nach einem der vorhergehenden Ansprüche,
**dadurch gekennzeichnet, dass**
die zweite zeitliche Abkühlrate (ΔT_{K}/Δt) durch eine dem Ziehofen nachgeschaltete Kühlstrecke (4) bewirkt wird.

5. Verfahren nach einem der vorhergehenden Ansprüche,
**dadurch gekennzeichnet, dass**
die dritte zeitliche Abkühlrate (T_{T}/Δt) durch eine dem Ziehofen und/oder der Kühlstrecke nachgeschaltete zweite Ofenvorrichtung (5) bewirkt wird, wobei die Ofenvorrichtung innerhalb einer Kernzone bei der Glasfaser eine an der zweiten Ofenvorrichtung vorliegenden Eintrittstemperatur (T_{K1}) aufrecht erhält.

6. Verfahren nach einem der vorhergehenden Ansprüche,
**dadurch gekennzeichnet, dass**
zur Herstellung der Preform ein Beschichtungsprozess in einer Atmosphäre mit einem reduzierten Sauerstoffanteil ausgeführt wird.

7. Verfahren nach einem der vorhergehenden Ansprüche,
**dadurch gekennzeichnet, dass**
an der Preform und/oder der Glasfaser eine Bestrahlung mit einem Spektralbereich zwischen 170 nm und 12 µm ausgeführt wird.

8. Verfahren nach Anspruch 7,
**dadurch gekennzeichnet, dass**
die Bestrahlung der Preform und/oder der Glasfaser durch ein Einkoppeln der Strahlung in den Lichtleitweg der Preform und/oder der Glasfaser erfolgt.

## Claims

1. A method for producing a glass fiber (1) through longitudinally drawing a preform (2) in a drawing kiln (3), wherein cooling the glass fiber is performed in at least three time periods, wherein the glass fiber is exposed to a first time based cooling rate (ΔT_{Z}/Δt) above a crystallization temperature range (ΔT_{K}), to a second time based cooling rate (ΔT_{K}/Δt) that is greater than the first time based cooling rate within the crystallization temperature range, and to a third time based cooling rate (ΔT_{T}/Δt) which is smaller than the second time based cooling rate below the crystallization temperature range.

2. The method according to claim 1, wherein the first time based cooling rate (ΔT_{Z}/ Δt) is caused by a drawing velocity of less than 10 m/min, preferably less than 5 m/min, more preferably less than 2 m/min.

3. The method according to claim 1 or 2, wherein the first time based cooling rate (ΔT_{Z}/ Δt) is determined through an extended hot core zone that is arranged in the drawing kiln.

4. The method according to one of the preceding claims, wherein the second time based cooling rate (ΔT_{K}/Δt) is caused by a cooling path (4) arranged downstream of the drawing kiln.

5. The method according to one of the preceding claims, wherein the third time based cooling rate (T_{T}/ΔT) is caused by a second kiln device (5) arranged downstream of the drawing kiln and/or the cooling path, wherein the second kiln device maintains an entry temperature (T_{K1}) within a core zone of the glass fiber, wherein the entry temperature (T_{K1}) is provided at the second kiln device.

6. The method according to one of the preceding claims, wherein a coating process in an atmosphere with reduced oxygen content is provided for producing the preform.

7. The method according to one of the preceding claims, wherein an irradiation with a spectral range between 170 nm and 12 µm is provided at the preform and/or the glass fiber.

8. The method according to claim 7, wherein the irradiation of the preform and/or of the glass fiber is provided through coupling the radiation into the light conductive path of the preform and/or of the glass fiber.

## Revendications

1. Procédé pour fabriquer une fibre de verre (1) par étirage, exécuté sur une préforme (2) dans un four de tirage (3),
dans lequel
il se produit un refroidissement de la fibre de verre dans au moins trois phases temporelles dans lesquelles la fibre de verre est soumise, au-dessus d'une plage de température de cristallisation (ΔTk) à une première vitesse refroidissement temporelle (ΔTz/Δt), à l'intérieur de la plage de température de cristallisation à une seconde vitesse refroidissement temporelle (ΔTk/Δt) plus élevée par comparaison à la première vitesse refroidissement et, au-dessous de la plage de température de cristallisation à une troisième vitesse refroidissement (ΔTt/Δt) plus faible par comparaison à la seconde vitesse de refroidissement.

2. Procédé selon la revendication 1,
**caractérisé en ce que** la première vitesse de refroidissement temporelle (ΔTz/Δt) est provoquée par une vitesse de tirage inférieure à 10 m/min, de préférence inférieure à 5m/min, et de manière encore plus préférée inférieure à 2 m/min.

3. Procédé selon la revendication 1 ou 2,
**caractérisé en ce que** la première vitesse de refroidissement temporelle (ΔTz/Δt) est déterminée par une zone centrale chaude prolongée agencée dans le four de tirage.

4. Procédé selon l'une des revendications précédentes,
**caractérisé en ce que** la seconde vitesse de refroidissement temporelle (ΔTk/Δt) est provoquée par un trajet de refroidissement (4) raccordé en aval au four de tirage.

5. Procédé selon l'une des revendications précédentes,
**caractérisé en ce que** la troisième vitesse refroidissement temporelle (ΔTt/Δt) est provoquée par un second dispositif en forme de four (5) raccordé en aval au four de tirage et/ou au trajet de refroidissement, le dispositif en forme de four étant maintenu, à l'intérieur d'une zone centrale aux alentours de la fibre de verre, à une température d'entrée (Tk1) qui se présente au niveau du second dispositif en forme de four.

6. Procédé selon l'une des revendications précédentes,
**caractérisé en ce que**, pour la réalisation de la préforme, on exécute un processus de revêtement dans une atmosphère avec une proportion réduite en oxygène.

7. Procédé selon l'une des revendications précédentes,
**caractérisé en ce que** l'on exécute sur la préforme et/ou sur la fibre de verre, une irradiation avec une plage spectrale entre 170 nm et 12 µm.

8. Procédé selon la revendication 7,
**caractérisé en ce que** l'irradiation de la préforme et/ou de la fibre de verre a lieu par injection du rayonnement dans le trajet conducteur de lumière de la préforme et/ou de la fibre de verre.
